(19) Europäisches Patentamt
European Patent Office
Office européen des brevets

(11) **EP 1 186 092 B1**

(12) **FASCICULE DE BREVET EUROPEEN**

(45) Date de publication et mention
de la délivrance du brevet:
**27.01.2010 Bulletin 2010/04**

(21) Numéro de dépôt: **01919581.7**

(22) Date de dépôt: **27.03.2001**

(51) Int Cl.:
***H02M 7/08*** *(2006.01)*     ***H02M 7/10*** *(2006.01)*

(86) Numéro de dépôt international:
**PCT/FR2001/000928**

(87) Numéro de publication internationale:
**WO 2001/076052 (11.10.2001 Gazette 2001/41)**

(54) **DISPOSITIF D'ALIMENTATION ELECTRIQUE, NOTAMMENT POUR RESEAU DE BORD DE VEHICULE AUTOMOBILE**

ELEKTRISCHE VERSORGUNGSEINRICHTUNG, INSBESONDERE FÜR ARMATURENBRETTNETZ EINES FARZEUGS

ELECTRIC SUPPLY DEVICE, IN PARTICULAR FOR MOTOR VEHICLE ON-BOARD NETWORK

(84) Etats contractants désignés:
**DE ES GB IT**

(30) Priorité: **04.04.2000 FR 0004278**

(43) Date de publication de la demande:
**13.03.2002 Bulletin 2002/11**

(73) Titulaire: **VALEO EQUIPEMENTS ELECTRIQUES MOTEUR**
**94017 Créteil Cedex (FR)**

(72) Inventeurs:
• **PLASSE, Cédric**
**F-92380 Garches (FR)**
• **BAZET, Jean-Michel**
**F-94700 Maisons Alfort (FR)**
• **HUART, David**
**F-75012 Paris (FR)**
• **VOGELSBERGER, Marcel**
**F-91320 Wissous (FR)**

(74) Mandataire: **Gamonal, Didier**
**Valeo Equipements Electriques Moteur**
**Propriété Industrielle**
**2 Rue André Boulle**
**B.P. 150**
**94017 Créteil Cedex (FR)**

(56) Documents cités:
**EP-A- 0 534 153     EP-A- 0 884 820**
**NL-A- 8 700 173     US-A- 3 694 731**
**US-A- 5 956 243**

**Description**

La présente invention est relative à un dispositif d'alimentation électrique, notamment pour réseau de bord de véhicule automobile.

Un des problèmes rencontrés avec les alternateurs qui alimentent les réseaux de bord de véhicules automobiles tient en ce qu'ils sont entraînés par le moteur thermique à des vitesses de rotations variables.

Les performances des alternateurs sont par conséquent variables avec le régime du moteur, alors que le réseau de bord demanderait d'être alimenté par une puissance constante.

Pour remédier à cet inconvénient sans augmenter d'une façon prohibitive le poids, l'encombrement et le coût du générateur, différents dispositifs ont été proposés.

Ils sont tous basés sur l'un des deux principes suivants :

- entraînement de l'alternateur à travers un dispositif à rapport variable.
- doubles alternateurs ou alternateur à double bobinages triphasés, branchés en série aux faibles régimes du moteur et en parallèle aux forts régimes du moteur.

Les dispositifs connus à ce jour restent complexes et coûteux ou présentent des performances réduites.

Un but de l'invention est de pallier ces inconvénients.

Elle propose à cet effet un dispositif d'alimentation électrique, notamment pour réseau de bord de véhicule automobile, comportant au moins deux sources d'alimentation qui sont toutes deux montées entre la masse et une ligne d'alimentation et qui comprennent chacune au moins un bobinage d'induit et un pont d'éléments redresseurs, caractérisé en ce que ces deux sources comportent l'une un pont auxiliaire d'éléments redresseurs de type positif, l'autre un pont auxiliaire d'éléments redresseurs de type négatif, des moyens reliés à l'un et à l'autre de ces deux ponts étant aptes à être commandés pour :

- dans un premier état, relier en série les deux pont auxiliaires, la tension redressée fournie à la ligne d'alimentation étant alors la somme des tensions fournies par le ou les bobinages d'induit de chacune des deux sources et redressées,
- dans un deuxième état, bloquer la liaison entre les deux ponts auxiliaires, les deux sources alimentant alors en parallèle la ligne d'alimentation.

Un tel dispositif est avantageusement complété par les différentes caractéristiques suivantes :

- les deux sources sont des sources triphasées ;

- un moyen de commande est un interrupteur commandable interposé entre les deux ponts auxiliaires ;
- un moyen de commande est une diode commandée interposée entre les deux ponts auxiliaires ;
- un moyen de commande est un transistor de type CMOS interposé entre les deux ponts auxiliaires ;
- un moyen de commande comporte des diodes commandées qui constituent des éléments redresseurs de l'un et/ou de l'autre des deux ponts auxiliaires ;
- les diodes des deux ponts auxiliaires sont portées par un même support.
- les deux sources sont deux alternateurs sur lesquels sont respectivement implantés l'un et l'autre des deux ponts auxiliaires ;
- les deux sources sont des sources synchrones, les éléments redresseurs des deux ponts auxiliaires étant reliés deux à deux et assurant la liaison entre les phases des deux sources qui se correspondent, les branches qui relient deux éléments redresseurs de l'un et l'autre des deux ponts auxiliaires étant deux à deux reliées par des moyens formant interrupteur, ces moyens formant interrupteur constituant le moyen de commande ;
- les deux sources sont des sources triphasées synchrones et en ce que le moyen de commande comporte au moins un interrupteur double.
- les deux bobinages d'induit consistent respectivement en un bobinage d'induit monté en triangle et en un bobinage d'induit monté en étoile.
- le bobinage d'induit monté en triangle comporte un nombre de spires par encoche égal au nombre de spires par encoche du bobinage d'induit monté en étoile que multiplie la racine carrée du nombre de phases de la machine électrique.

D'autres caractéristiques et avantages de l'invention ressortiront encore de la description qui suit, laquelle est purement illustrative et non limitative et doit être lue en regard des dessins annexés sur lesquels :

- la figure 1 est une représentation schématique d'un dispositif d'alimentation électrique à deux sources monophasées, conforme à un mode de réalisation possible de l'invention ;
- la figure 2 est une représentation schématique d'un dispositif d'alimentation électrique à deux sources triphasées, conforme à un mode de réalisation possible de l'invention ;
- les figures 3 à 7 illustrent cinq dispositifs d'alimentation électriques à sources triphasées, conformes à des variantes de réalisation possibles de l'invention.

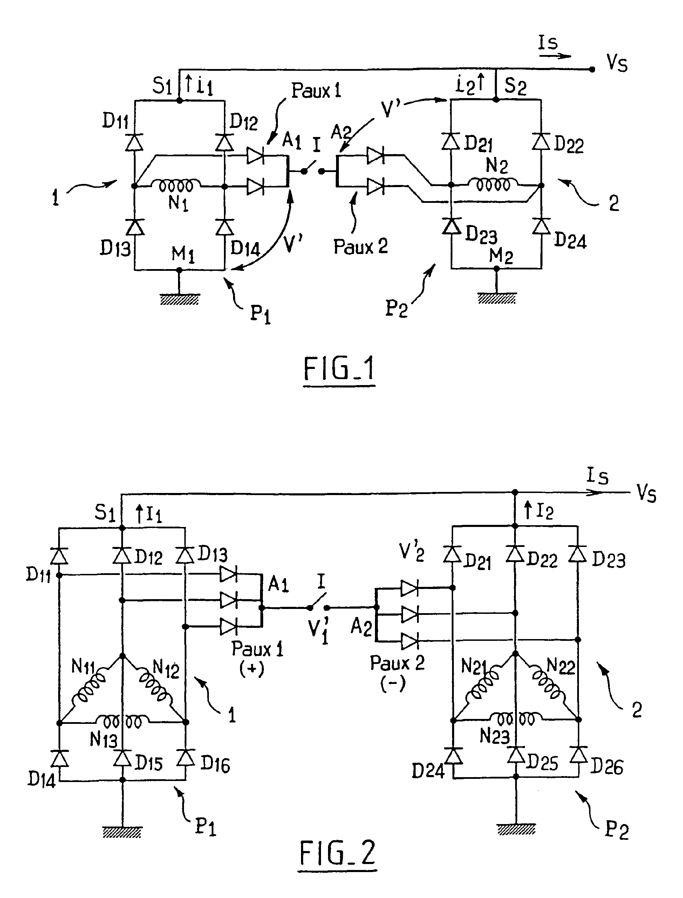

Le dispositif représenté sur la figure 1 comporte deux sources monophasées 1, 2, dont on a représenté les bobinages d'induit N1 et N2, ainsi que les ponts de redressement P1, P2 qui leur sont associés.

Les bobinages induits N1 et N2 sont soit les secondaires de deux transformateurs, soit encore deux bobinages stators d'un même alternateur.

Ces deux ponts P1, P2 comportent chacun, de façon classiquement connue en soi, deux demi-ponts de diodes, l'un positif, l'autre négatif.

Sur cette figure 1, les diodes positives du pont P1 ont été référencées par D11 et D12, tandis que ses diodes négatives ont été référencées par D13 et D14 ; les diodes positives du pont P2 ont quant à elles été référencées par D21 et D22, tandis que les diodes négatives ont été référencées par D23 et D24.

Chacune des deux sources est en outre associée à un pont redresseur auxiliaire $P_{aux1}$, $P_{aux2}$.

Plus précisément, les deux diodes du pont auxiliaire $P_{aux1}$ sont reliées au bobinage d'induit N1 par leur anode, tandis que les deux diodes du pont auxiliaire $P_{aux2}$ sont reliées au bobinage d'induit N2 par leur cathode, les ponts auxiliaires $P_{aux1}$ et $P_{aux2}$ constituant ainsi respectivement un pont auxiliaire de type positif et un pont auxiliaire de type négatif ; le point commun aux deux diodes du pont redresseur $P_{aux1}$, référencé par A1, est relié au point, référencé par A2, commun aux deux diodes du pont redresseur $P_{aux2}$ par un interrupteur commandé, référencé par I.

Sur la figure 1, on a également porté le courant $I_s$ délivré par le dispositif au réseau de bord au véhicule, le potentiel $V_s$ de ce réseau de bord, les courants i1 et i2 qui traversent respectivement l'un et l'autre des deux ponts redresseurs P1, P2, ainsi que les points M1, S1 et M2, S2 par lesquels lesdits ponts redresseurs P1, P2 sont reliés à la masse et au réseau de bord.

Le fonctionnement d'un tel montage est le suivant.

Dans le cas où l'interrupteur 1 est ouvert, les deux systèmes sont branchés en parallèle et les deux ponts auxiliaires branchés sur chacun des ponts principaux ne jouent alors aucun rôle. Le courant Is est alors la somme des courant Is1 et Is2. La tension Vs est égale à la tension V' entre M1 et A1 ou entre M2 et A2 - la tension au point A1 étant l'image de celle du point S1 de même que la tension au point A2 est l'image de celle du point M2.

Dans le cas où l'interrupteur 1 est fermé, les potentiels des points A1 et A2 sont identiques et de valeur V'. Les diodes D23 et D24 sont alors polarisées en inverse et isolent par conséquent le bobinage N2 de la masse. La tension Vs est alors la somme des deux tensions générées par les deux bobinages N1 et N2, soit 2V'.

Les diodes D11 et D12 sont dans ce cas également polarisées en inverse et isolent le bobinage N1 de la tension de sortie Vs.

L'exemple illustré sur la figure 1 dans le cas de sources monophasées peut bien entendu être généralisé au cas de sources à n phases, et notamment au cas de sources triphasées.

Un exemple de réalisation possible avec des sources triphasées est représenté sur la figure 2.

Les bobinages triphasés de la première source ont été référencés par N11, N12, N13, tandis que ceux de la deuxième source ont été référencés par N21, N22 et N23.

Les diodes positives du pont P1 associé à la première source ont été référencées par D11, D12, D13, tandis que ses diodes négatives ont été référencées par D14, D15 et D16.

Les diodes positives du pont P2 associé à la deuxième source ont quant à elles été référencées par D21, D22, D23, tandis que ses diodes négatives ont été référencées par D24, D25 et D26.

Les deux ponts auxiliaires, l'un de type positif, l'autre de type négatif, ont été référencés par $P_{aux1}$ et $P_{aux2}$. Les diodes du pont $P_{aux1}$ sont reliées aux bobinages d'induits de la source 1 par leurs anodes, tandis que les diodes du pont $P_{aux2}$ sont reliées aux bobinages d'induits de la source 2 par leurs anodes. Un interrupteur I commandé est interposé entre les points A1 et A2, qui sont respectivement le point auquel les diodes du pont $P_{aux1}$ sont reliées par leurs cathodes et le point auquel les diodes du pont $P_{aux2}$ sont reliées par leurs anodes.

Le fonctionnement d'un tel dispositif est le suivant.

Dans le cas où l'interrupteur I est fermé, la tension V'1 mesurée au point A1 est la tension redressée délivrée par la première source triphasée (source 1).

La valeur de la tension Vs est alors la somme de V'1 et de V'2, où V'2 est la tension redressée délivrée par la deuxième source triphasée (source 2). La tension Vs étant supérieure à V'1, les diodes positives du pont 1, à savoir D11, D12, D13, sont polarisées en inverse ; elles isolent par conséquent le système triphasé 1 de la tension de sortie Vs, le courant 11 étant par conséquent nul. Les diodes négatives du pont 2, à savoir D24, D25, D26, sont elles-mêmes polarisées par V'1 qui est supérieure à 0 ; elles sont donc également bloquées et isolent le système triphasé 2 de la masse.

Dès que l'interrupteur I est ouvert, les deux systèmes triphasés fonctionnement de nouveau en parallèle, le courant Is est alors la somme de I1 et de I2.

De nombreuses variantes de réalisation sont bien entendu envisageables.

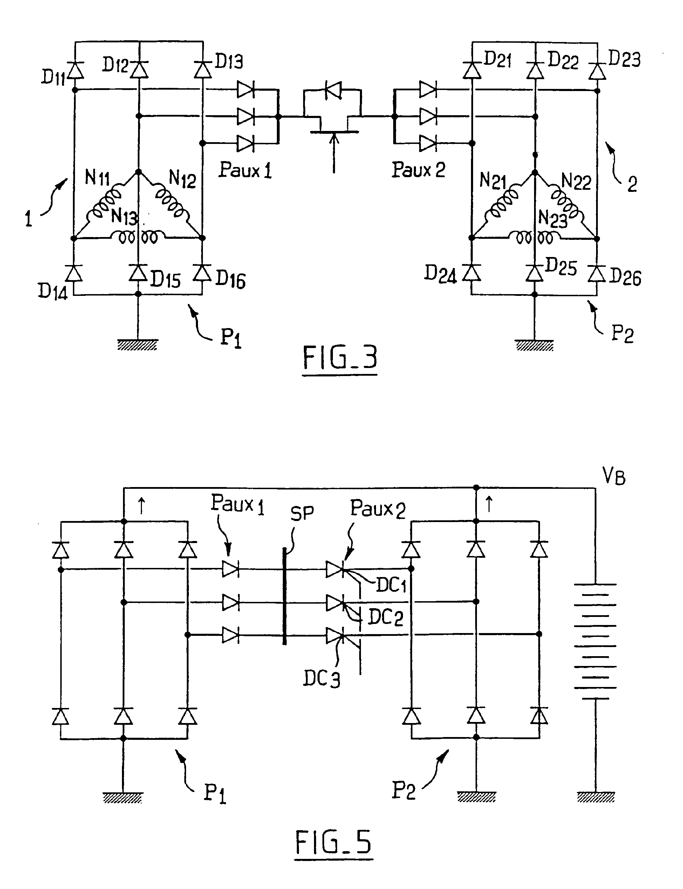

Notamment, l'interrupteur I peut être remplacé, soit par une diode commandée, soit par un T transistor du type CMOS comme représenté sur la figure 3.

Dans ce dernier cas, le transistor T du type CMOS doit être orienté de telle sorte que la diode intrinsèque qui lui est associée en parallèle par construction soit opposée aux diodes des deux ponts auxiliaires.

En variante encore, l'interrupteur I peut être avantageusement remplacé par trois diodes commandées Dc1, Dc2, Dc3 confondues avec les trois diodes du pont auxiliaire positif $P_{aux1}$. Ces trois diodes commandées sont dans ce cas pilotées ensemble en tout ou rien.

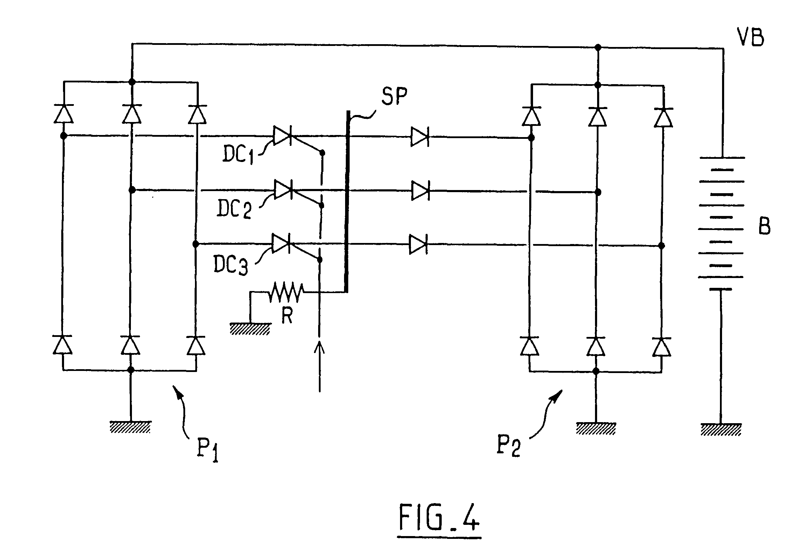

Les deux supports de diodes des ponts auxiliaires peuvent alors être remplacées par un support unique Sp comme représenté sur la figure 4, qui est par exemple une plaque métallique reliée à la masse par une résistance R assurant sa polarisation.

Bien entendu, les trois diodes commandées Dc1, Dc2, Dc3 peuvent aussi être placées - en fonction des convenances d'implantation ou des impératifs de conception du circuit électronique - sur le pont auxiliaire négatif $P_{aux2}$ (figure 5).

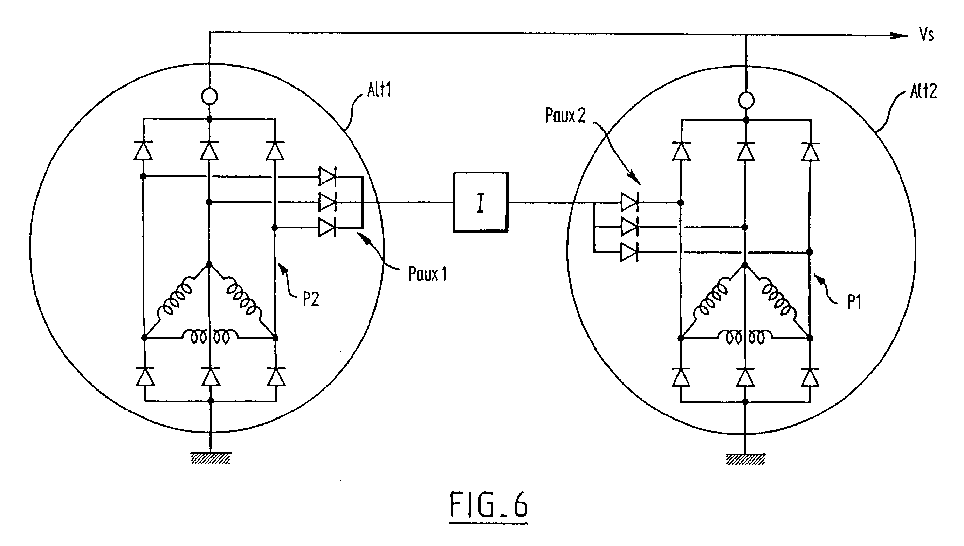

Ainsi que l'illustre la figure 6, l'invention trouve avantageusement application pour la commutation série-parallèle de deux alternateurs séparés à redressement ALT1, ALT2.

Pour des convenances d'implantation les deux ponts auxiliaires $P_{aux1}$ et $P_{aux2}$ y sont préférentiellement disposés séparément sur chacun des deux alternateurs ALT1, ALT2. La commutation peut dans ce cas être faite, soit par un dispositif séparé (élément de rupture 1 sur la figure 6) soit encore par des diodes commandées disposées sur l'un des deux ponts auxiliaires. Dans ce cas d'application, le dispositif est particulièrement avantageux du fait que le conducteur à l'extérieur des deux alternateurs conduit un courant continu.

Comme on l'aura compris, les diodes des dispositifs proposés peuvent être remplacées par des diodes du type ZENER avec une tension d'écrêtage appropriée ou encore avec des diodes dites SHOTTKY.

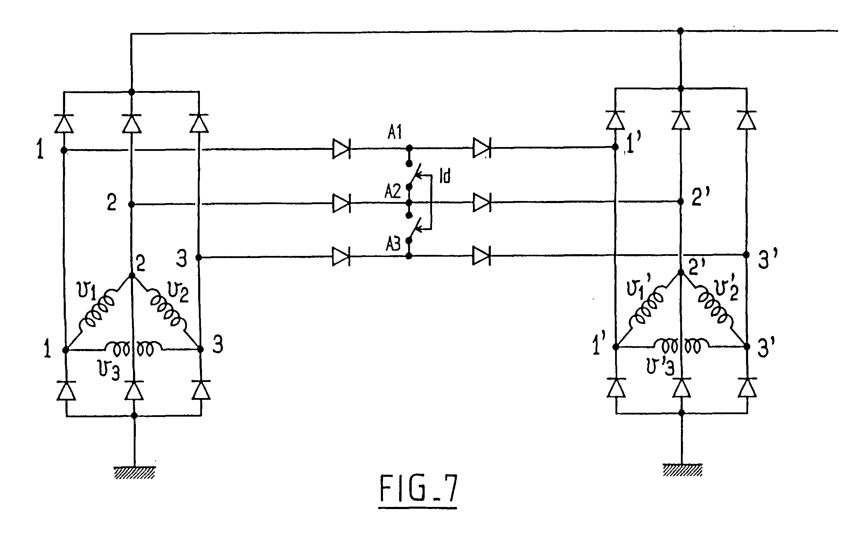

La figure 7 montre une variante de l'invention, dans laquelle le dispositif est commandé à l'aide d'un interrupteur double monté entre des points A1, A2, A3 sur des branches qui relient entre elles les diodes du pont $P_{aux1}$ et les diodes du pont $P_{aux2}$.

Si l'interrupteur double est ouvert, les six diodes des deux ponts auxiliaires $P_{aux1}$, $P_{aux2}$ sont branchées en série deux par deux entre les bobines d'une même phase, et ne jouent alors aucun rôle car les points 1 et 1', 2 et 2', ainsi que 3 et 3' sont au même potentiel. Le dispositif fonctionne dans ce cas dans la configuration parallèle.

Dans le cas où l'interrupteur double est fermé, le dispositif fonctionne en série comme représenté sur la figure 2. Cette variante s'applique uniquement dans le cas d'un synchronisme parfait entre les deux systèmes triphasés.

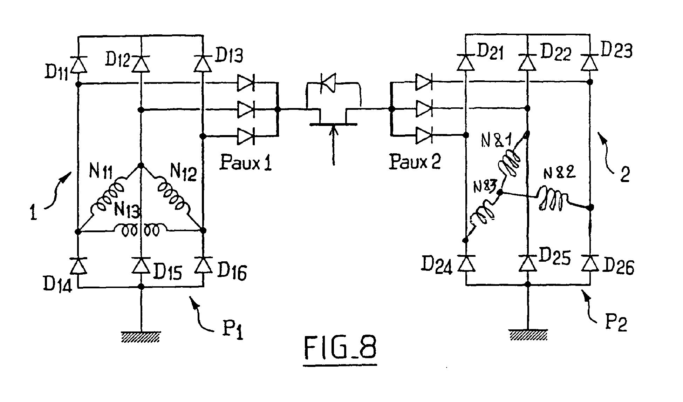

En variante, il est possible de remplacer avantageusement les bobinages triphasés de la deuxième source montés en triangle et référencés par N21, N22 et N23 dans la figure 3, par un bobinage monté en étoile, comme représenté à la figure 8 avec les références N81, N82 et N83.

Afin d'établir une égalité entre les forces électromotrices des deux bobinages d'induit, le nombre de spires par encoche des deux bobinages d'induit est tel que :

$$NT = (n)^{\frac{1}{2}} \times NE$$

Avec:

- NT = nombre de spires par encoche au bobinage d'induit monté en triangle.
- NE = nombre de spires par encoche au bobinage d'induit monté en étoile.
- n = nombre de phases.

Ce mode de réalisation, qui combine un bobinage d'induit monté en triangle avec un bobinage d'induit monté en étoile, associé aux montages série-parallèle notamment décrits aux figures 2 à 6, offre l'avantage de réduire l'ondulation crête-crête de la tension d'alimentation du réseau de bord en sortie du dispositif de redressement, et cela, que les deux induits soient connectés en série ou en parallèle.

Ceci particulièrement avantageux notamment dans le cas où la batterie d'accumulateur est située à une distance importante de l'alternateur car l'effet de filtrage de la tension par la capacité de la batterie est diminué.

Un autre avantage provient de la diminution du bruit magnétique résultant de la réduction des vibrations créées par l'interaction entre le rotor et le stator de la machine électrique.

Il en résulte une ondulation d'ordre 4 fois le nombre de phases de chaque bobinage d'induit, soit par exemple, un ordre 12 pour un bobinage de type triphasé.

Les montages du type comportant 2 bobinages d'induit montés en triangles uniquement présentent un taux d'ondulation inférieur égal à 2 fois le nombre de phases de chaque bobinage d'induit, soit par exemple, un ordre 6 pour un bobinage triphasé.

Bien entendu, dans tous les modes de réalisation décrits précédement, les bobinages d'induits montés en étoile et en triangle sont interchangeables.

Bien entendu, cette invention peut également être mise en oeuvre pour des alternateurs de véhicule automobile du type décrit précédement mais comportant un stator bobiné avec des conducteurs de gros diamètre en forme de barres. Un tel bobinage de stator est décrit par exemple dans le document W0 92/06257. Ces conducteurs en forme de barres remplissent bien les encoches que comporte le corps du stator et se présentent généralement sous la forme d'épingles de section avantageusement ronde, carrée ou rectangulaire. Des conducteurs sous la forme de barres coudées peuvent par exemple remplacer avantageusement les épingles.

Grâce à l'invention, un tel stator bobiné avec de gros conducteurs en forme de barres pourra être refroidi aisément.

L'agencement du stator dans le carter 14 selon l'invention est avantageusement applicable aux alternateurs de véhicule automobile ou aux machines électriques de type "alterno-démarreurs" connus en soi qui sont aptes à fonctionner alternativement comme moteur de démarreur ou comme alternateur. Pour plus de précision, on se reportera à la demande FR-0003131 déposée le 10 mars 2000.

## Revendications

1. Dispositif d'alimentation électrique, notamment pour réseau de bord de véhicule automobile, comportant au moins deux sources d'alimentation (1, 2) qui sont toutes deux montées entre la masse et une ligne d'alimentation et qui comprennent chacune au moins un bobinage d'induit et un pont d'éléments redresseurs (P1, P2), **caractérisé en ce que** ces deux sources comportent l'une un pont auxiliaire d'éléments redresseurs de type positif ($P_{aux1}$), l'autre un pont auxiliaire d'éléments redresseurs de type négatif ($P_{aux2}$), des moyens (I ; Dc1, Dc2, Dc3 ; Id) reliés à l'un et à l'autre de ces deux ponts étant aptes à être commandés pour :

   - dans un premier état, relier en série les deux pont auxiliaires ($P_{aux1}$ ; $P_{aux2}$), la tension redressée fournie à la ligne d'alimentation étant alors la somme des tensions fournies par le ou les bobinages d'induit de chacune des deux sources et redressées,
   - dans un deuxième état, bloquer la liaison entre les deux ponts auxiliaires ($P_{aux1}$ ; $P_{aux2}$), les deux sources alimentant alors en parallèle la ligne d'alimentation.

2. Dispositif selon la revendication 1, **caractérisé en ce que** les deux sources (1, 2) sont des sources triphasées.

3. Dispositif selon la revendication 1, **caractérisé en ce qu'**un moyen de commande est un interrupteur commandable (I) interposé entre les deux ponts auxiliaires.

4. Dispositif selon l'une des revendications 1 ou 2, **caractérisé en ce qu'**un moyen de commande est une diode commandée interposée entre les deux ponts auxiliaires.

5. Dispositif selon l'une des revendications 1 ou 2, **caractérisé en ce qu'**un moyen de commande est un transistor de type CMOS interposé entre les deux ponts auxiliaires.

6. Dispositif selon l'une des revendications 1 ou 2, **caractérisé en ce qu'**un moyen de commande comporte des diodes commandées (Dc1, Dc2, Dc3) qui constituent des éléments redresseurs de l'un et/ou de l'autre des deux ponts auxiliaires.

7. Dispositif selon la revendication 6, **caractérisé en ce que** les diodes des deux ponts auxiliaires ($P_{aux1}$ ; $P_{aux2}$) sont portées par un même support (Sp).

8. Dispositif selon l'une des revendications précédentes, **caractérisé en ce que** les deux sources sont deux alternateurs (ALT1, ALT2) sur lesquels sont respectivement implantés l'un et l'autre des deux ponts auxiliaires.

9. Dispositif selon l'une des revendications précédentes, **caractérisé en ce que** les deux sources sont des sources synchrones, les éléments redresseurs des deux ponts auxiliaires ($P_{aux1}$ ; $P_{aux2}$) étant reliés deux à deux et assurant la liaison entre les phases des deux sources qui se correspondent, les branches qui relient deux éléments redresseurs de l'un et l'autre des deux ponts auxiliaires ($P_{aux1}$ ; $P_{aux2}$) étant deux à deux reliées par des moyens (Id) formant interrupteur, ces moyens formant interrupteur constituant le moyen de commande.

10. Dispositif selon la revendication 9, **caractérisé en ce que** les deux sources sont des sources triphasées synchrones et **en ce que** le moyen de commande comporte au moins un interrupteur double (Id),

11. Dispositif selon l'une des revendications 1 à 8, **caractérisé en ce que** les deux bobinages d'induit consistent respectivement en un bobinage d'induit monté en triangle (N11, N12, N13) et en un bobinage d'induit monté en étoile (N81, N82, N83).

12. Dispositif selon la revendication 11, **caractérisé en ce que** le bobinage d'induit monté en triangle (N11, N12, N13) comporte un nombre de spires par encoche égal au nombre de spires par encoche du bobinage d'induit monté en étoile (N81, N82, N83) que multiplie la racine carrée du nombre de phases de la machine électrique.

## Claims

1. Electrical supply device, in particular for an on-board network of a motor vehicle, comprising at least two supply sources (1, 2) which are both fitted between the earth and a supply line, and each comprise at least one rotor winding and a rectifier element bridge (P1, P2), **characterised in that** these two sources comprise in the one case an auxiliary rectifier element bridge of a positive type ($P_{aux1}$), and in the other case an auxiliary rectifier element bridge of a negative type ($P_{aux2}$), means (I; Dc1, Dc2, Dc3; Id) which are connected to both of these two bridges being able to be controlled in order to:

   - in a first state, connect the two auxiliary bridges ($P_{aux1}$; $P_{aux2}$) in series, the rectified voltage which is supplied to the supply line then being the sum of the voltages supplied by the rotor winding(s) of each of the two sources and rectified;

- in a second state, block the connection between the two auxiliary bridges ($P_{aux1}$; $P_{aux2}$), the two sources then supplying the supply line in parallel.

2. Device according to claim 1, **characterised in that** the two sources (1, 2) are three-phase sources.

3. Device according to claim 1, **characterised in that** a control means is a controllable switch (I) which is interposed between the two auxiliary bridges.

4. Device according to one of claims 1 or 2, **characterised in that** a control means is a controlled diode which is interposed between the two auxiliary bridges.

5. Device according to one of claims 1 or 2, **characterised in that** a control means is a transistor of the CMOS type which is interposed between the two auxiliary bridges.

6. Device according to one of claims 1 or 2, **characterised in that** a control means comprises controlled diodes (Dc1, Dc2, Dc3) which constitute rectifier elements of one and/or the other of the two auxiliary bridges.

7. Device according to claim 6, **characterised in that** the diodes of the two auxiliary bridges ($P_{aux1}$; $P_{aux2}$) are supported by a single support (Sp).

8. Device according to one of the preceding claims, **characterised in that** the two sources are two alternators (ALT1, ALT2), on which both of the two auxiliary bridges respectively are implanted.

9. Device according to one of the preceding claims, **characterised in that** the two sources are synchronous sources, the rectifier elements of the two auxiliary bridges ($P_{aux1}$; $P_{aux2}$) being connected in pairs, and assuring the connection between the phases of the two sources which correspond to one another, the branches which connect two rectifier elements of both of the two auxiliary bridges ($P_{aux1}$; $P_{aux2}$) being connected in pairs by means (Id) which form a switch, these means forming a switch which constitutes the control means.

10. Device according to claim 9, **characterised in that** the two sources are synchronous three-phase sources, and **in that** the control means comprises at least one double switch (Id).

11. Device according to one of claims 1 to 8, **characterised in that** the two rotor windings consist respectively of a rotor winding which is fitted in the form of a triangle (N11, N12, N13) and a rotor winding which is fitted in the form of a star (N81, N82, N83).

12. Device according to claim 11, **characterised in that** the rotor winding which is fitted in the form of a triangle (N11, N12, N13) comprises a number of turns per notch which is equal to the number of turns per notch of the rotor winding which is fitted in the form of a star (N81, N82, N83), which is multiplied by the square root of the number of phases of the electric machine.

**Patentansprüche**

1. Stromversorgungsvorrichtung, insbesondere für das Bordnetz eines Kraftfahrzeugs, mit mindestens zwei Versorgungsquellen (1, 2), die beide zwischen der Masse und einer Versorgungsleitung geschaltet sind und die jeweils mindestens eine Ankerwicklung und eine Brücke mit Gleichrichterelementen (P1, P2) umfassen, **dadurch gekennzeichnet, dass** von diesen zwei Versorgungsquellen die eine eine Hilfsbrücke mit Gleichrichterelementen positiven Typs ($P_{aux1}$) und die andere eine Hilfsbrücke mit Gleichrichterelementen negativen Typs ($P_{aux2}$) umfasst, wobei mit der einen und der anderen dieser beiden Brücken verbundene Mittel (I; Dc1, Dc2, Dc3; Id) angesteuert werden können, um:

   - in einem ersten Zustand die beiden Hilfsbrücken ($P_{aux1}$; $P_{aux2}$) in Reihenschaltung zu verbinden, wobei die an die Versorgungsleitung gelieferte gleichgerichtete Spannung dann der Summe der durch die Ankerwicklung(en) jeder der beiden Versorgungsquellen gelieferten und gleichgerichteten Spannungen entspricht,
   - in einem zweiten Zustand die Verbindung zwischen den beiden Hilfsbrücken ($P_{aux1}$; $P_{aux2}$) zu sperren, wobei die beiden Versorgungsquellen dann die Versorgungsleitung in Parallelschaltung speisen.

2. Vorrichtung nach Anspruch 1, **dadurch gekennzeichnet, dass** die beiden Versorgungsquellen (1, 2) Drehstromquellen sind.

3. Vorrichtung nach Anspruch 1, **dadurch gekennzeichnet, dass** ein Steuerungsmittel ein zwischen den beiden Hilfsbrücken eingefügter steuerbarer Schalter (I) ist.

4. Vorrichtung nach einem der Ansprüche 1 oder 2, **dadurch gekennzeichnet, dass** ein Steuerungsmittel eine zwischen den beiden Hilfsbrücken eingefügte gesteuerte Diode ist.

5. Vorrichtung nach einem der Ansprüche 1 oder 2, **dadurch gekennzeichnet, dass** ein Steuerungsmittel ein zwischen den beiden Hilfsbrücken eingefügter CMOS-Transistor ist.

6. Vorrichtung nach einem der Ansprüche 1 oder 2, **dadurch gekennzeichnet, dass** ein Steuerungsmittel gesteuerte Dioden (Dc1, Dc2, Dc3) umfasst, die Gleichrichterelemente der einen und/oder der anderen der beiden Hilfsbrücken bilden.

7. Vorrichtung nach Anspruch 6, **dadurch gekennzeichnet, dass** die Dioden der beiden Hilfsbrücken ($P_{aux1}$; $P_{aux2}$) auf ein und demselben Träger (Sp) angebracht sind.

8. Vorrichtung nach einem der vorangehenden Ansprüche, **dadurch gekennzeichnet, dass** die beiden Versorgungsquellen zwei Wechselstromgeneratoren (ALT1, ALT2) sind, an denen die eine bzw. die andere der beiden Hilfsbrücken angeordnet ist.

9. Vorrichtung nach einem der vorangehenden Ansprüche, **dadurch gekennzeichnet, dass** die beiden Versorgungsquellen Synchronquellen sind, wobei die Gleichrichterelemente der beiden Hilfsbrücken ($P_{aux1}$; $P_{aux2}$) paarweise verbunden sind und die Verbindung zwischen den einander entsprechenden Phasen der beiden Versorgungsquellen herstellen, wobei die Zweige, die zwei Gleichrichterelemente der einen und der anderen der beiden Hilfsbrücken ($P_{aux1}$; $P_{aux2}$) verbinden, paarweise durch als Schalter dienende Mittel (Id) verbunden sind, wobei diese als Schalter dienenden Mittel das Steuerungsmittel bilden.

10. Vorrichtung nach Anspruch 9, **dadurch gekennzeichnet, dass** die beiden Versorgungsquellen synchrone Drehstromquellen sind und dass das Steuerungsmittel mindestens einen Doppelschalter (Id) umfasst.

11. Vorrichtung nach einem der Ansprüche 1 bis 8, **dadurch gekennzeichnet, dass** die beiden Ankerwicklungen aus einer in Dreieckschaltung geschalteten Ankerwicklung (N11, N12, N13) beziehungsweise aus einer in Sternschaltung geschalteten Ankerwicklung (N81, N82, N83) bestehen.

12. Vorrichtung nach Anspruch 11, **dadurch gekennzeichnet, dass** die in Dreieckschaltung geschaltete Ankerwicklung (N11, N12, N13) eine Windungszahl pro Nut umfasst, die gleich der Windungszahl pro Nut der in Sternschaltung geschalteten Ankerwicklung (N81, N82, N83), multipliziert mit der Quadratwurzel der Phasenzahl der elektrischen Maschine, ist.

FIG_1

FIG_2

FIG_3

FIG_5

FIG. 4

FIG.6

FIG.7

EP 1 186 092 B1

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9206257 A

- FR 0003131